# FASCICULE DE BREVET EUROPEEN

(11) **EP 3 847 340 B1**
(45) Date de publication et mention de la délivrance du brevet: **16.08.2023**
(21) Numéro de dépôt: 19774172.1
(22) Date de dépôt: 03.09.2019
(51) Int. Cl.: F01D 5/22, F01D 5/28

(54) **AUBE MOBILE**
LAUFSCHAUFEL
ROTOR BLADE

(30) Priorité: 05.09.2018 FR 1857965
(43) Date de publication de la demande: 14.07.2021
(73) Titulaire: SAFRAN AIRCRAFT ENGINES, 75015 Paris (FR)
(72) Inventeur: BASSERY, Josserand, Jacques, André, 77550 MOISSY-CRAMAYEL (FR); GIMEL, Alexandre, 77550 MOISSY-CRAMAYEL (FR); TANG, Ba-Phuc, 77550 MOISSY-CRAMAYEL (FR); PATEL, Vijeay, 77550 MOISSY-CRAMAYEL (FR); KNITTEL, Stéphane, 77550 MOISSY-CRAMAYEL (FR)
(74) Mandataire: Regimbeau
(86) Numéro de dépôt international: PCT/FR2019/052027
(87) Numéro de publication internationale: WO 2020/049252

(56) Documents cités:
- EP-A2- 1 936 119
- EP-A2- 2 090 748
- WO-A1-2014/023425

## Description

### DOMAINE DE L'INVENTION ET ETAT DE LA TECHNIQUE

La présente invention concerne le domaine des aubes de turbine.

Sur un turboréacteur, la turbine récupère une partie de l'énergie issue de la combustion des gaz pour le fonctionnement de la soufflante, du compresseur et des accessoires. On trouve en général deux modules de compresseur et deux modules de turbine (haute pression et basse pression)

Parmi les pièces constitutives de la turbine, les roues mobiles et le distributeur jouent un rôle essentiel.

En effet, à l'issue d'une chambre de combustion les gaz vont se détendre dans le distributeur. Celui-ci va faire accélérer l'écoulement et va le dévier. Sous l'effet de cet écoulement les roues mobiles ayant aussi des profils déviateurs tournent. Cette énergie est utilisée pour le fonctionnement de la soufflante, du compresseur basse pression et du compresseur haute pression. Entre les roues mobiles, on trouve des stators fixes qui redressent le flux dévié.

Chaque roue mobile est constituée d'une pluralité d'aubes. Chaque aube comprend essentiellement une pale présentant un extrados un intrados et deux extrémités. A une extrémité proximale de la pale (proche de l'axe de rotation) l'aube présente un pied de fixation. A une extrémité distale de la pale, l'aube présente un talon, notamment dans la partie basse pression de la turbine.

Usuellement, le talon comprend au moins deux nervures supérieures (s'étendant selon une direction azimutale), appelées léchettes, qui permettent d'assurer une étanchéité dynamique avec le carter.

De plus, le talon comprend généralement deux surfaces de contact azimutales. Chaque surface de contact azimutale est en contact avec une aube voisine de la roue mobile. Chaque surface de contact azimutale présente un dépôt de matériau dur (le plus souvent à base de cobalt), différent du matériau de l'aube (le plus souvent à base de nickel). La couche de matériau dur est appelée matériau anti-usure. L'utilisation d'un matériau anti-usure est bien connue, on peut par exemple se référer au document WO 2014/118456 qui décrit l'application d'un matériau anti-usure sur une léchette.

Une fois les aubes montées en couronne dans la roue mobile, les matériaux anti-usure permettent, en réalisant un amortissement par un contact entre aubes, de dissiper l'énergie vibratoire du mode propre de chaque aube. Cette fonction sert à prévenir d'une rupture en fatigue vibratoire.

Les matériaux anti-usure actuels sont fixés par soudage TIG (Tungsten Inert Gas) via l'application d'un alliage de type KC28WN ou KD28CS selon les configurations moteur. Dans le cas particulier des aubes en alliage de titane et d'aluminium, il n'est pas possible de réaliser un soudage TIG. Il est donc nécessaire d'appliquer les matériaux anti-usure par une autre voie. Dans ce cas spécifique les matériaux anti-usure sont appliqués par projection thermique. Un procédé de projection plasma est utilisé pour déposer un dépôt à base de cobalt qui peut avoir la composition cobalt - molybdène - chrome - silicium (CoMoCrSi). Ce dépôt en sur épaisseur n'est pas repris en usinage par la suite. C'est ce dépôt qui assure la fonction de matériau anti-usure.

Néanmoins, dans les deux cas, le matériau anti-usure peut avoir tendance à se décrocher. Il est alors nécessaire de décaper le talon puis d'y redéposer un matériau anti-usure, ce qui est long est onéreux. Le document EP-1936119 décrit une poche formée dans une surface de contact azimutale d'une aube. Un obturateur est déposé dans la poche et a une surface externe durable; dans lequel l'enveloppe d'embout vient en contact avec une enveloppe d'embout adjacente.

Dans ce contexte, il est nécessaire de fournir une aube à laquelle le matériau anti-usure est fixé durablement.

### PRESENTATION GENERALE DE L'INVENTION

Selon un premier aspect, l'invention concerne une aube mobile en alliage de titane et d'aluminium, pour une turbine de turboréacteur comprenant une pale et au moins un talon à une extrémité distale de la pâle. Le talon présente au moins une surface de contact azimutale avec une autre aube directement adjacente. Un matériau dur résistant à l'abrasion, dit matériau anti-usure, est déposé sur l'au moins une surface de contact azimutale. Une empreinte est réalisée dans ladite au moins une surface de contact azimutale. Le matériau anti-usure est déposé dans l'empreinte. Chaque surface de contact azimutale présente une pluralité de facettes successives définissant un profil en chevron, chaque surface de contact azimutale comprenant une empreinte et un matériau anti-usure dans l'empreinte par facette.

D'une manière particulièrement avantageuse, l'empreinte permet de fixer le matériau anti-usure en retrait par rapport à la surface de contact azimutale. Ainsi, la région d'interface (de fixation) entre le matériau anti-usure et le talon est moins exposée aux frottements et aux chocs, ce qui permet de garantir une meilleure tenue du matériau anti-usure . En outre, la fixation du matériau anti-usure dans l'empreinte permet de n'avoir que la surface de l'empreinte à préparer pour la fixation, contrairement aux dispositifs connus dans lesquelles toutes la surface de contact azimutale est préparée (i.e. la préparation consiste le plus souvent en une modification de l'état de surface). En sus, le matériau anti-usure déposé dans l'empreinte peut avoir une épaisseur plus importante que celle des matériaux anti-usure des dispositif connus (l'épaisseur du matériau anti-usure étant ici définie par la profondeur de l'empreinte).

Ledit matériau anti-usure peut affleurer de l'empreinte.

Cette disposition permet de conserver précisément les cotes azimutales du talon sans ajouter de surépaisseur à la surface de contact azimutale.

Chaque empreinte peut présenter une rugosité comprise entre 2 et 4µm.

Chaque empreinte peut présenter une profondeur comprise entre 0,1 et 0,5mm.

Selon un autre aspect, l'invention concerne une roue mobile pour une turbine de turboréacteur comprenant une pluralité d'aubes selon l'invention. Les aubes sont disposées circonférentiellement, les surfaces de contact azimutales de chaque aube étant en contact avec les surfaces de contact azimutales des deux autres aubes adjacentes. Selon un autre aspect, l'invention concerne un procédé de fabrication d'une aube selon l'invention, le procédé étant caractérisé en ce qu'il comprend les étapes de :
(a) fabrication de l'aube comprenant le talon,
(b) réalisation d'une empreinte chaque surface de contact azimutale du talon,
(c) dépôt d'un matériau anti-usure dans chaque empreinte.

Selon une disposition particulière, l'étape (b) peut comprendre une phase d'usinage par électroérosion de chaque empreinte.

Selon une autre disposition particulière, l'étape (b) peut comprendre une phase de fraisage de chaque empreinte.

L'étape (b) peut comprendre une phase de sablage de chaque empreinte pour qu'elle présente une rugosité comprise entre 2 et 4 µm.

L'étape (c) peut comprendre une phase de projection plasma du matériau anti-usure dans chaque empreinte.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une vue d'ensemble d'une aube selon l'invention,
- la figure 2 est une vue partielle d'une première surface de contact azimutale d'une aube selon l'invention,
- la figure 3 est une vue partielle d'une deuxième surface de contact azimutale d'une aube selon l'invention,
- la figure 4 est une vue partielle, en coupe, d'une empreinte.

### DESCRIPTION DETAILLEE DE L'INVENTION

### Architecture générale

L'invention concerne une aube 1 mobile en alliage de titane et d'aluminium, pour une turbine de turboréacteur comprenant une pale 2 et un talon 3 à une extrémité distale de la pâle 2.

On définit un repère de l'aube 1 comprenant un axe longitudinal X (correspondant à un axe longitudinal du turboréacteur, i.e. un axe de rotation du rotor), un axe radial Z orthogonal à l'axe longitudinal X, et un axe azimutal Y (i.e. tangentiel, c'est-à-dire orthogonal à la fois à l'axe radial Z et à l'axe longitudinal X).

Selon le mode de réalisation ici présenté, le talon 3 présente deux surfaces de contact azimutales 31 et 32 avec une autre aube 1 directement adjacente. Ladite « autre aube » est en pratique une aube voisine de la même roue mobile, préférentiellement identique à l'aube 1 présentement décrite.

Les deux surfaces de contact azimutales 31, 32 sont opposées. La surface 31 d'une aube 1 est en contact avec la surface 32 de l'autre aube 1 directement adjacente. Par convention (et comme représenté sur les dessins), on peut arbitrairement prévoir que la surface 31 est une surface d'extrados et la surface 32 est une surface d'intrados pour l'aube 1.

En outre, le talon 3 présente une série de nervures appelées léchettes 4. Les léchettes 4 permettent à l'usage d'assurer une étanchéité dynamique entre l'aube 1 et un carter (non représenté).

D'une manière usuelle, l'aube 1 peut être fabriquée en alliage de titane et d'aluminium.

### Empreinte

Selon le mode de réalisation ici présenté, une empreinte 5 est réalisée dans chaque surface de contact azimutale 31 et 32. Il est précisé que le nombre d'empreintes 5 dans les surfaces de contact azimutale 31 et 32 n'est pas limitatif. Si besoin est, une surface de contact azimutale 31 ou 32 pourrait présenter, par exemple, deux ou trois empreintes 5. Selon une disposition particulière les empreintes 5 sont réalisées dans les surfaces de contact azimutales 31 ou 32, entre les léchettes 4.

Le procédé de réalisation de l'empreinte 5 sera détaillé ci-après.

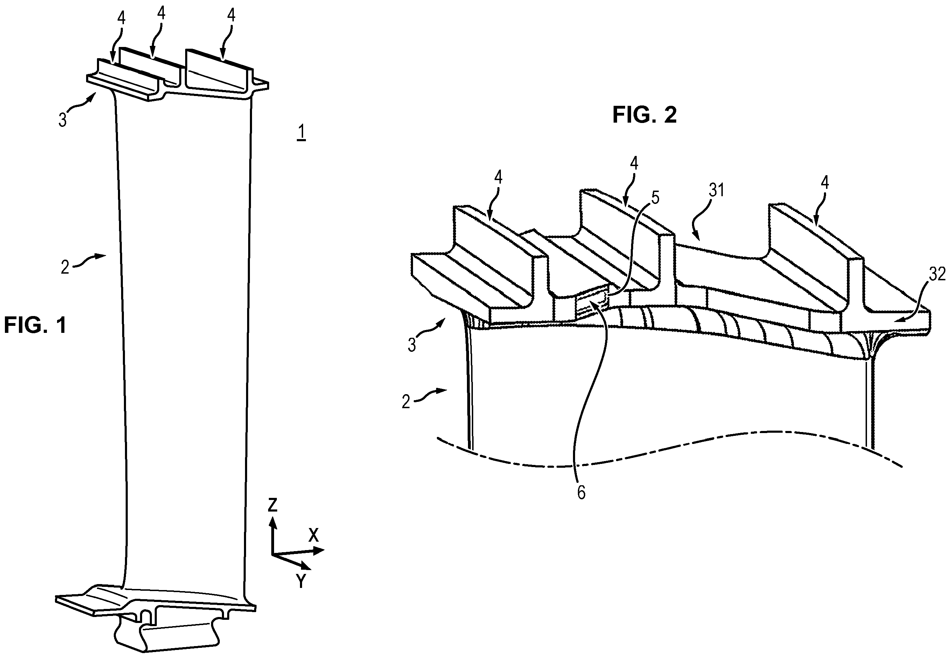

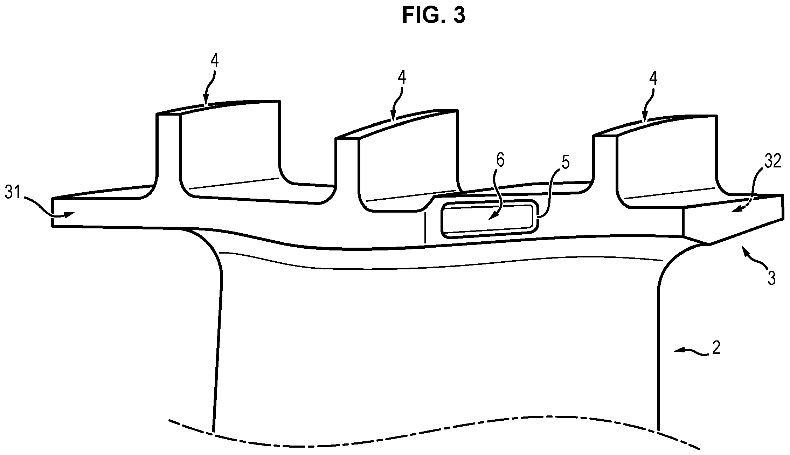

En référence aux figures 2 et 3, chaque empreinte 5 peut couvrir une aire sensiblement parallélépipédique. En l'espèce chaque empreinte 5 couvre avantageusement une aire sensiblement rectangulaire.

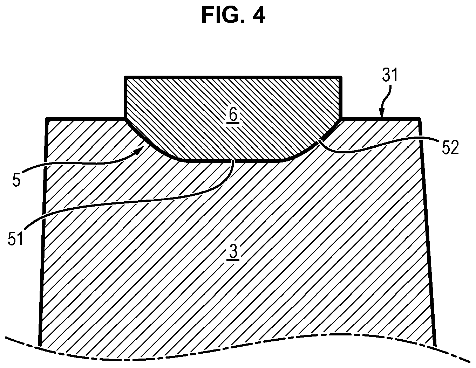

Comme on peut le voir sur la figure 4, chaque empreinte 5 peut présenter une paroi de fond 51 sensiblement plane et des congés ou des chanfreins 52 reliant la paroi de fond 51 à la surface de contact azimutale 31 ou 32.

Chaque empreinte 5 peut présenter une profondeur comprise entre 0,1 et 0,5 millimètres. Par profondeur, il est entendu, une cote entre le plan de la surface de contact azimutale 31 ou 32 correspondante (selon une direction orthogonale à ce plan de surface) et le plan de la paroi de fond 51, ou du moins le point le plus profond de l'empreinte 5.

D'une manière préférentielle, chaque empreinte 5 peut présenter une profondeur sensiblement égale à 0,25 millimètres.

En sus, chaque empreinte 5 peut présenter une rugosité comprise entre 2 et 4 micromètres. La rugosité définit l'état de surface de chaque empreinte 5. L'intervalle de rugosité ici proposé permet de garantir la bonne fixation d'un matériau anti-usure 6 dans l'empreinte 5.

### Matériau anti-usure

Un matériau dur résistant à l'abrasion, dit matériau anti-usure 6, est déposé dans chaque empreinte 5. Par dépôt, on entend l'application de matière d'une façon ou d'une autre dans l'empreinte 5 de sorte à obtenir un matériau anti-usure 6 fixé dans l'empreinte 5.

Un procédé préféré de dépôt du matériau anti-usure 6 sera détaillé ultérieurement, mais avantageusement, ladite matière est appliquée sous un état liquide, solide ou pâteux de sorte que le matériau anti-usure 6 est créé in-situ dans l'empreinte.

Le matériau anti-usure 6 peut être un alliage à base de cobalt. Selon une disposition particulière, le matériau anti-usure 6 peut avoir la composition suivante : cobalt - molybdène - chrome - silicium (CoMoCrSi).

D'une manière préférentielle, chaque matériau anti-usure 6 affleure de l'empreinte 5 dans laquelle il est positionné. En d'autres termes, la surface visible du matériau anti-usure 6 dépasse légèrement de la surface de contact azimutale 31 ou 32. Selon une disposition préférée, le matériau anti-usure 6 affleure de moins de 60 microns de l'empreinte 5 dans laquelle il est positionné. En d'autres termes, selon une disposition préférée, le matériau anti-usure 6 dépasse de moins de 60 microns de la surface de contact azimutale 31 ou 32.

### Procédé de fabrication

Le procédé de fabrication de l'aube 1 comprend préférentiellement les étapes suivantes :
(a) fabrication d'une aube 1 comprenant un talon 3, le talon 3 étant à ce stade un talon « normal », c'est-à-dire conforme à l'art antérieur, i.e. dépourvu d'empreinte 5,
(b) réalisation d'au moins une empreinte 5 dans chaque surface de contact azimutale 31 ou 32,
(c) dépôt d'un matériau anti-usure 6 dans chaque empreinte 5.

L'étape (a) de fabrication de l'aube 1 peut être réalisée par moulage, ou forgeage, et/ou usinage.

La fabrication de la forme générale de l'aube 1 est réalisée selon des méthodes connues qui ne seront donc pas développées.

En d'autres termes, plutôt que de réaliser directement une aube 1 avec un talon 3 pourvu de la ou les empreintes 5, on réalise l'empreinte 5 à posteriori en enlevant de la matière. On notera cependant que la présente invention n'est pas limitée à ce procédé de fabrication et qu'il est tout à fait possible de produire directement une aube 1 à talon 3 directement pourvu de la ou les empreintes 5 (par exemple par moulage), même si cela est plus complexe.

Selon une disposition particulière, l'étape (b) peut comprendre une phase d'usinage par électroérosion de chaque empreinte 5.

Selon une autre disposition particulière, l'étape (b) peut comprendre une phase de fraisage de chaque empreinte 5.

Il est remarquable que l'usinage par électroérosion ou par fraisage peut être réalisé pour mettre en forme l'empreinte 5 à partir d'un talon 3 « brut » initialement dépourvu d'empreinte 5 ; ou peut être réalisé sur un talon 3 possédant déjà une empreinte 5, pour en améliorer l'état de surface.

Quel que soit le mode de réalisation (en particulier le mode d'usinage si l'on forme l'empreinte 5 à posteriori dans le talon 3) choisi pour obtenir le talon 3 pourvu de l'empreinte 5, l'état de surface de l'empreinte 5 peut être repris pour en modifier la rugosité.

Ainsi, d'une manière préférentielle, l'étape (b) peut comprendre une phase de sablage de chaque empreinte 5 pour qu'elle présente une rugosité comprise entre 2 et 4 µm.

Enfin, un matériau anti-usure 6 est déposé (i.e. fixé) dans chaque empreinte 5. D'une manière préférentielle, l'étape (c) de fixation des matériaux anti-usure 6 peut être réalisée par projection plasma. D'une manière alternative, l'étape (c) pourrait, par exemple, être réalisée par soudage TIG.

### Comportement en conditions d'utilisation

En condition d'utilisation, plusieurs aubes 1 sont fixées en couronne pour former une roue mobile (non représentée).

Les surfaces de contact azimutales 31, 32, coïncident, et les matériaux anti-usure 6 de chaque aube 1 sont avantageusement en contact avec les matériaux anti-usure 6 d'une aube 1 voisine.

Les matériaux anti-usure 6 permettent d'absorber les vibrations des aubes 1 ainsi que les chocs inter-aubes 1. La dureté du matériau des matériaux anti-usure 6 leur permet d'absorber les chocs et les frottements tout en préservant le reste du talon 3 qui est dans un matériau plus tendre.

D'une manière particulièrement avantageuse, la fixation des matériaux anti-usure 6 dans les empreintes 5, permet au matériau anti-usure d'être affleurant par rapport à l'empreinte 5 et aux surfaces de contact azimutales 31 et 32, de sorte que le matériau anti-usure 6 n'est que très peu en surépaisseur par rapport à la surface de contact azimutale 31 ou 32, ce qui limite le jeu entre les aubes 1.

En outre, le dépôt des matériaux anti-usure 6 dans les empreintes 5 permet à la zone d'interface, d'accroche, du matériau anti-usure 6 d'être en retrait par rapport à la surface azimutale de contact 31 ou 32, et donc d'être moins exposée aux chocs. De plus, le positionnement du matériau anti-usure 6 dans l'empreinte 5 permet de renforcer le maintien du matériau anti-usure 6. En effet, celui-ci est tenu, d'une part, par intrication d'une zone d'interface du matériau anti-usure 6 avec la surface de l'empreinte 5, suite à une fusion partielle du matériau anti-usure 6 lors de son dépôt. D'autre part, le matériau anti-usure est aussi en liaison encastrement dans l'empreinte 5, où il est maintenu par les rebords de l'empreinte 5. Ainsi, le matériau anti-usure 6 et protégé d'un éventuel arrachement en cisaillement.

En sus, le matériau anti-usure 6 fixé dans l'empreinte 5 peut tout en affleurant peu avoir une épaisseur plus importante que celle des matériaux anti-usure 6 des dispositif connus (l'épaisseur du matériau anti-usure 6 étant ici définie depuis le fond de l'empreinte 5), et donc être plus robuste et plus résistant aux chocs.

Ainsi, l'invention propose une aube 1 dans laquelle le matériau anti-usure 6 est fixé durablement.

## Revendications

1. Aube (1) mobile en alliage de titane et d'aluminium, pour une turbine de turboréacteur comprenant une pale (2) et au moins un talon (3) à une extrémité distale de la pâle (2), le talon (3) présentant au moins une surface de contact azimutale (31, 32) avec une autre aube (1) directement adjacente, un matériau dur résistant à l'abrasion, dit matériau anti-usure (6), étant déposé sur l'au moins une surface de contact azimutale (31, 32), une empreinte (5) est réalisée dans ladite au moins une surface de contact azimutale (31, 32), le matériau anti-usure (6) étant déposé dans l'empreinte (5) et, chaque surface de contact azimutale (31, 32) présente une pluralité de facettes successives définissant un profil en chevron, l'aube (1) étant **caractérisée en ce que** chaque surface de contact azimutale (31, 32) comprenant une empreinte et un matériau anti-usure (6) dans l'empreinte (5) par facette.

2. Aube (1) selon la revendication 1, **caractérisé en ce que** ledit matériau anti-usure (6) affleure de chaque empreinte (5).

3. Aube (1) selon l'une des revendications 1 ou 2, dans laquelle chaque empreinte (5) présente une rugosité comprise entre 2 et 4pm.

4. Aube (1) selon l'une quelconque des revendications 1 à 3 dans laquelle chaque empreinte (5) présente une profondeur comprise entre 0,1 et 0,5mm.

5. Roue mobile pour une turbine de turboréacteur comprenant une pluralité d'aubes (1) selon l'une des revendications 1 à 4 disposées circonférentiellement, dans laquelle les surfaces de contact azimutales (31, 32) de chaque aube (1) étant en contact avec les surfaces de contact azimutales (31, 32) des deux autres aubes (1) adjacentes.

6. Procédé de fabrication d'une aube (1) selon l'une des revendications 1 à 4, le procédé étant **caractérisé en ce qu'**il comprend les étapes de :
(a) fabrication de l'aube (1) comprenant le talon (3),
(b) réalisation d'une empreinte (5) dans chaque surface de contact azimutale (31, 32) du talon (3),
(c) dépôt d'un matériau anti-usure (6) dans chaque empreinte (5).

7. Procédé selon la revendication 6 dans lequel l'étape (b) comprend une phase d'usinage par électroérosion de chaque empreinte (5).

8. Procédé selon la revendication 6 dans lequel l'étape (b) comprend une phase de fraisage de chaque empreinte (5).

9. Procédé selon l'une des revendications 6 à 8, dans lequel l'étape (b) comprend une phase de sablage de chaque empreinte (5) pour qu'elle présente une rugosité comprise entre 2 et 4 µm.

10. Procédé selon l'une des revendications 6 à 8 dans lequel l'étape (c) comprend une phase de projection plasma du matériau anti-usure (6) dans chaque empreinte (5).

## Patentansprüche

1. Bewegliche Schaufel (1) aus einer Titan-Aluminium-Legierung für eine Turbinenmaschine, die eine Schaufel (2) und mindestens einen Absatz (3) an einem distalen Ende der Schaufel (2) umfasst, wobei der Absatz (3) mindestens eine azimutale Kontaktfläche (31, 32) mit einer anderen, direkt angrenzenden Schaufel (1) aufweist, wobei auf der mindestens einen azimutalen Kontaktfläche (31, 32) ein hartes, abriebfestes Material, das als verschleißfestes Material (6) bezeichnet wird, aufgebracht ist, eine Vertiefung (5) in der mindestens einen azimutalen Kontaktfläche (31, 32) ausgebildet ist, wobei das verschleißfeste Material (6) in der Vertiefung (5) aufgebracht ist, und, jede azimutale Kontaktfläche (31, 32) eine Vielzahl von aufeinanderfolgenden Facetten aufweist, die ein Fischgrätenprofil definieren, wobei die Schaufel (1) **dadurch gekennzeichnet ist, dass** jede azimutale Kontaktfläche (31, 32) eine Vertiefung und ein verschleißfestes Material (6) in der Vertiefung (5) pro Facette umfasst.

2. Schaufel (1) nach Anspruch 1, **dadurch gekennzeichnet, dass** das verschleißfeste Material (6) bündig mit jeder Vertiefung (5) abschließt.

3. Schaufel (1) nach einem der Ansprüche 1 oder 2, wobei jede Vertiefung (5) eine Rauigkeit zwischen 2 und 4 µm aufweist.

4. Schaufel (1) nach einem der Ansprüche 1 bis 3, wobei jede Vertiefung (5) eine Tiefe zwischen 0,1 und 0,5 mm aufweist.

5. Laufrad für eine Turbotriebwerksturbine mit einer Vielzahl von Schaufeln (1) nach einem der Ansprüche 1 bis 4, die in Umfangsrichtung angeordnet sind, wobei die azimutalen Kontaktflächen (31, 32) jeder Schaufel (1) mit den azimutalen Kontaktflächen (31, 32) der beiden anderen benachbarten Schaufeln (1) in Kontakt stehen.

6. Verfahren zur Herstellung einer Schaufel (1) nach einem der Ansprüche 1 bis 4, wobei das Verfahren **dadurch gekennzeichnet ist, dass** es die folgenden Schritte umfasst:
(a) Herstellung der Schaufel (1), die einen Absatz (3) umfasst,
(b) Herstellen einer Vertiefung (5) in der azimutalen Kontaktfläche (31, 32) des Absatzes (3),
(c) Aufbringen eines verschleißfesten Materials (6) in jeder Vertiefung (5).

7. Verfahren nach Anspruch 6, bei dem der Schritt (b) eine Phase der Funkenerosionsbearbeitung der Vertiefung (5) umfasst.

8. Verfahren nach Anspruch 6, bei dem Schritt (b) eine Phase des Fräsens der Vertiefung (5) umfasst.

9. Verfahren nach einem der Ansprüche 6 bis 8, wobei Schritt (b) eine Phase umfasst, in der jede Vertiefung (5) sandgestrahlt wird, damit sie eine Rauigkeit zwischen 2 und 4 µm aufweist.

10. Verfahren nach einem der Ansprüche 6 bis 8, wobei Schritt (c) eine Phase des Plasmaspritzens des verschleißfesten Materials (6) in jede Vertiefung (5) umfasst.

## Claims

1. A moving blade (1) of titanium and aluminium alloy, for a turbojet turbine comprising an airfoil (2) and at least one bead (3) at a distal end of the airfoil (2), the bead (3) having at least one azimuthal contact surface (31, 32) with another directly adjacent blade (1), a hard abrasion-resistant material, called anti-wear material (6), being deposited on the at least one azimuthal contact surface (31, 32), an indentation (5) is made in the said at least one azimuthal contact surface (31, 32), the anti-wear material (6) being deposited in the indentation (5), and each azimuthal contact surface (31, 32) has a plurality of successive facets defining a chevron profile, the blade (1) being **characterized in that** each azimuthal contact surface (31, 32) comprises one indentation and one anti-wear material (6) in the indentation (5) per facet.

2. The blade (1) according to claim 1, **characterised in that** said anti-wear material (6) is flush with each indentation (5).

3. The blade (1) according to one of claims 1 or 2, wherein each indentation (5) has a roughness of between 2 and 4 µm.

4. The blade (1) according to any one of claims 1 to 3 wherein each indentation (5) has a depth of between 0.1 and 0.5 mm.

5. A moving wheel for a turbojet turbine engine comprising a plurality of blades (1) according to any one of claims 1 to 4 arranged circumferentially, wherein the azimuthal contact surfaces (31, 32) of each blade (1) are in contact with the azimuthal contact surfaces (31, 32) of the two other adjacent blades (1).

6. A method of manufacturing a blade (1) according to one of claims 1 to 4, the method being **characterised in that** it comprises the steps of:
(a) manufacturing the blade (1) comprising the bead (3),
(b) creating the indentation (5) in the azimuthal contact surface (31, 32) of the bead (3),
(c) depositing an anti-wear material (6) in the indentation (5).

7. The method according to claim 6 in which step (b) comprises a phase of machining the indentation (5) by electrical discharge.

8. The method according to claim 6 in which step (b) comprises a phase of milling the indentation (5).

9. The method according to one of claims 6 to 8, in which step (b) comprises a phase of sandblasting the indentation (5) so that it has a roughness comprised between 2 and 4 µm.

10. The method according to one of claims 6 to 8 in which step (c) comprises a phase of plasma spraying of the anti-wear material (6) into the indentation (5).
